# EUROPEAN PATENT SPECIFICATION

(11) **EP 4 484 178 B1**
(45) Date of publication and mention of the grant of the patent: **18.03.2026**
(21) Application number: 23200073.7
(22) Date of filing: 27.09.2023
(51) Int. Cl.: B60B 27/00, B60B 33/00, B60B 35/04

(54) **PUSH-PULL WALKING STICK**
PUSH-PULL-GEHSTOCK
CANNE DE MARCHE PUSH-PULL

(30) Priority: 27.06.2023 TW 112123883
(43) Date of publication of application: 01.01.2025
(73) Proprietor: ROPACE CO., LTD., Taoyuan City, 320675 (TW)
(72) Inventor: LEE, CHUN-HSIEN, 320675 Taoyuan City (TW); LIU, CHIH-HAO, 320675 Taoyuan City (TW)
(74) Representative: Wang, Bo

(56) References cited:
- CA-A1- 2 161 369
- CA-A1- 2 324 733
- CN-A- 103 355 881
- CN-U- 215 873 701
- GB-A- 2 304 095
- US-A1- 2023 054 910

## Description

### BACKGROUND OF THE INVENTION

### 1. Field of the invention

The present invention relates to a push-pull walking stick, and more particularly, to a push-pull walking stick combined with a wheel to assist users in walking.

### 2. Description of the prior art

With the development of technology and the improvement of living standards, people dependence on electronic products increases gradually, resulting in the increase of civil disease year by year. Therefore, people pay more attention to do exercise for health. Jogging and running are one of the popular sports. However, the long-term running will cause burden and abrasion to the knee and waist, and further serious sport injuries to the elders. Therefore, the walking stick exercise has been developed.

Walking stick exercise is a kind of exercise by walking with two sticks held by both hands and matching with the pace of walker to achieve the simultaneous participation of all four limbs. Walking stick exercise can not only adjust the step distance and walking posture for walkers, but also stretch the hands, elbows and shoulders at the same time and relax waist, to increase the amount of exercise, the calorie consumption and to promote blood circulation, and further to improve the breath, cardiovascular, with knee joints, waist and central nervous system.

Generally speaking, people lift the walking stick to move forward with their footsteps, and then apply the walking stick on the ground as a support point to exert force to generate forward force and take a step. However, during the walking , people need to lift the walking stick from the ground for the nest step and the walking stick has a weigh, and then it would cause unnecessary stamina consumption and also a burden on the wrist for a long time to lead to another sport injury.

CA 2 324 733 A1 provides a wheel for small vehicles and similar applications, the wheel having a molded hub concentric about its axis, said hub having a single, precision bushing journaled within the hub concentric about said axis. Two thread guards sandwich the wheel, the guards having shanks which meet in the middle of the bushing and affix the guards to the wheel by friction. CN103355881A discloses a push-pull walking stick for assisting a user in walking.

### SUMMARY OF THE INVENTION

Therefore, the present invention provides a push-pull walking stick to solve the problems of the prior art.

The invention is set out in the appended set of claims.

In summary, the push-pull walking stick of the present invention can generate support point and frictional force through the wheel holder and the wheel rotating, so as to achieve the purpose of pushing forward. Also, it is unnecessary to lift the stick body away from the ground while pulling forward through the rotation of the wheel, so as to achieve the effort-saving. Moreover, the push-pull walking stick of the present invention can fix the wheel holder on the stick body through the buckle ring and buckle structure to improve the stability. Furthermore, the push-pull walking stick of the present invention is provided with the protruding structure of the hubs and the recess structure of the shaft to install the shaft and the wheel on the wheel holder, and the wheel cannot move axially to reduce the costs and increase stability. Moreover, the push-pull walking stick of the present invention can prevent other substances from entering into the shaft through the cover plate to improve reliability.

### BRIEF DESCRIPTION OF THE APPENDED DRAWINGS

FIG. 1 is a structural schematic diagram illustrating a push-pull walking stick according to an embodiment of the present invention.
FIG. 2 is a sectional diagram illustrating the stick body and the wheel holder of FIG. 1.
FIG. 3 is an exploded diagram illustrating the wheel holder and the wheel of FIG. 1.
FIG. 4A is a sectional diagram illustrating the wheel holder and the wheel according to another embodiment of the present invention.
FIG. 4B is a sectional diagram illustrating the wheel holder and the wheel according to another embodiment of the present invention.
FIGs. 5A to 5C is schematic diagram illustrating people walking with the push-pull walking stick according to an embodiment of the present invention.
FIG. 6 is a structural schematic diagram illustrating a push-pull walking stick according to another embodiment of the present invention.

### DETAILED DESCRIPTION OF THE INVENTION

For the sake of the advantages, spirits and features of the present invention can be understood more easily and clearly, the detailed descriptions and discussions will be made later by way of the embodiments and with reference of the diagrams. It is worth noting that these embodiments are merely representative embodiments of the present invention, wherein the specific methods, devices, conditions, materials and the like are not limited to the embodiments of the present invention or corresponding embodiments. Moreover, the devices in the figures are only used to express their corresponding positions and are not drawing according to their actual proportion.

In the description of the present invention, it is to be understood that the orientations or positional relationships of the terms "longitudinal, lateral, upper, lower, front, rear, left, right, top, bottom, inner, outer" and the like are based on the orientation or positional relationship shown in the drawings. It is merely for the convenience of the description of the present invention and the description of the present invention, and is not intended to indicate or imply that the device or component referred to has a specific orientation, is constructed and operated in a specific orientation, and therefore cannot be understood as limitations of the invention.

In the description of this specification, the description with reference to the terms "a specific embodiment", "another specific embodiment" or "parts of specific embodiments" etc. means that the specific feature, structure, material or feature described in conjunction with the embodiment include in at least one embodiment of the present invention. In this specification, the schematic representations of the above-mentioned terms do not necessarily refer to the same embodiment. Moreover, the described specific features, structures, materials or characteristics can be combined in any one or more embodiments in a suitable manner.

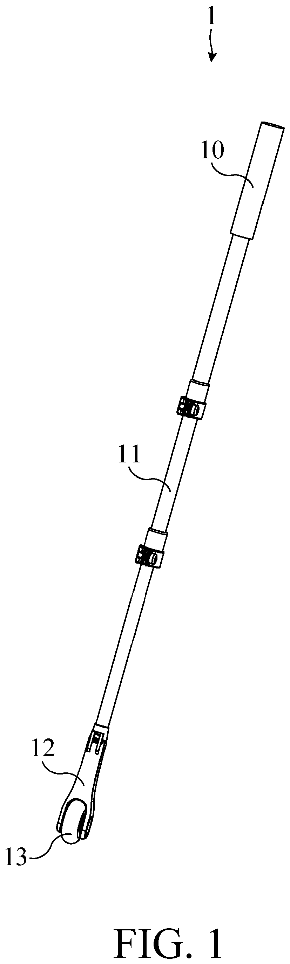

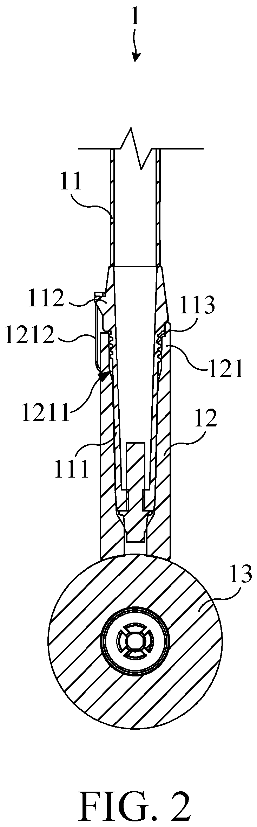

Please refer to FIG. 1 and FIG. 2. FIG. 1 is a structural schematic diagram illustrating a push-pull walking stick according to an embodiment of the present invention. FIG. 2 is a sectional diagram illustrating the stick body and the wheel holder. As shown in FIG 1, in the present embodiment, the push-pull walking stick 1 comprises a stick body 11, a wheel holder 12 and a wheel 13. The wheel holder 12 is connected to a first end of the stick body 11, and the wheel 13 is configured on the other end of the wheel holder 12 opposite to the end connected to the stick body 11. It means that the wheel holder 12 is located between the stick body 11 and the wheel 13. In practice, the push-pull walking stick 1 further includes a handle 10 arranged at a second end of the stick body 11 opposite to the first end for the user to hold, and the wheel 13 is facing the ground and configured to contact the ground. The stick body 11 can be, but not limited to, a round stick with fixed length. The stick body 11 can be a telescopic stick and include a joint for the user adjusting the length of the stick body 11 according to the height of the user or their habits.

As shown in FIGs. 1 and 2, in the present embodiment, the stick body 11 includes a tip 111 arranged at the first end of the stick body 11. The wheel holder 12 includes the connecting part 121 having a fixing hole 1211 for accommodating the tip 111 to connect with the stick body 11. In practice, the shape of the fixing hole 1211 matches the shape of the tip 111. When the stick body 11 and the wheel holder 12 are assembled together, the tip 111 of the stick body 11 can be embedded in the fixing hole 1211 of the wheel holder 12.

Furthermore, the stick body 11 includes a buckle structure 112, and the connecting part 121 of the wheel holder 12 includes a buckle ring 1212 matching the buckle structure 112. As shown in FIG. 2, the buckle structure 112 has an inclined plane. The buckle ring 1212 can be elastic. The height of the buckle structure 112 is larger than the thickness of the buckle ring 1212. When the stick body 11 and the wheel holder 12 are assembled together, the buckle ring 1212 moves along the inclined plane of the buckle structure 112. The buckle ring 1212 is attached on the buckle structure 112 to prevent the wheel holder 12 from moving away and being removed from the stick body 11, so as to fix the wheel holder 12 on the stick body 11. In practice, the wheel holder 12 can be a detachable component, and the user can install and remove the wheel holder 12 according to their requirement.

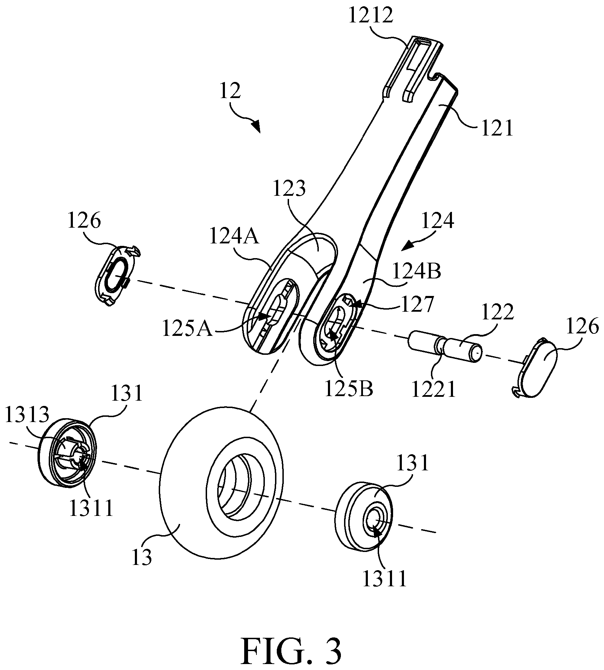

Please refer to Figure 1 and Figure 3. FIG. 3 is an exploded diagram illustrating the wheel holder 12 and the wheel 13 of FIG. 1. As shown in FIG. 3, in the present embodiment, the wheel holder 12 includes a shaft 122, a resist structure 123 and a clamp part 124. The clamp part 124 is arranged opposite to the connecting part 121, and the shaft 122 is movably configured on the clamping part 124. The resist structure 123 is connected to the connecting part 121 and located between the connecting part 121 and the shaft 122. Furthermore, the clamping part 124 includes a first clamping arm 124A and a second clamping arm 124B opposite to each other, and two ends of the shaft 122 are respectively configured on the first clamping arm 124A and the second clamping arm 124B. It means that the shaft 122 is arranged cross the first clamping arm 124A and the second clamping arm 124B. An accommodation space is formed between the first clamping arm 124A and the second clamping arm 124B, and the resist structure 123 is located between the first clamping arm 124A and the second clamping arm 124B.

In the present embodiment, the first clamping arm 124A has a first elongated hole 125A, and the second clamping arm 124B has a second clamping hole 125B. The first elongated hole 125A and the second clamping hole 125B respectively extend along the direction of the stick body 11 and are corresponding to each other, and the two ends of the shaft 122 are respectively configured in the first elongated hole 125A and the second clamping hole 125B. Therefore, the shaft 122 can move in the first elongated hole 125A and the second clamping hole 125B. That is to say, the shaft 122 can move toward or away from the stick body 11. In practice, the diameter of the shaft 122 matches the width of the first elongated hole 125A and the second clamping hole 125B, so that the shaft 122 can move in a single direction.

In the present embodiment, the wheel 13 includes two hubs 131 configured opposite to each other, and each hub 131 has a through hole 1311. The wheel 13 is configured on the shaft 122 by the through hole 1311 of the hub 131, so that the wheel 13 can be installed on the wheel holder 12. In practice, the size of the through hole 1311 of the hub 131 matches the diameter of the shaft 122, and the distance between the first clamping arm 124A and the second clamping arm 124B matches the width of the wheel 13. When the shaft 122 moves along the direction of the stick body 11, the shaft 122 will also drive the wheel 13 to move.

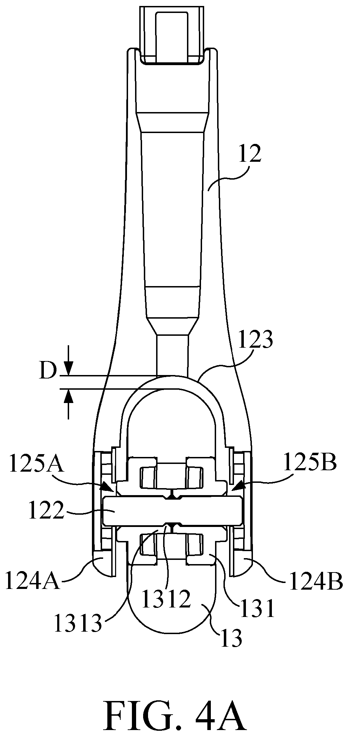

Please refer to FIG. 3 and FIG. 4A. FIG. 4A is a sectional diagram illustrating the wheel holder and the wheel. As shown in FIG. 3 and FIG. 4A, in the present embodiment, the hub 131 includes a protruding structure 1312 protruding from the through hole 1311, and the shaft 122 includes a recess structure 1221. When the wheel 13 is configured on the shaft 122, the protruding structure 1312 of the hub 131 is restricted in the recess structure 1221 of the shaft 122. In practice, the hub 131 includes four pieces of spring sheets 1313 arranged around the through hole 1311, and a protruding structure 1312 is configured on the end of each spring sheet 1313 and protrudes inward. It should be noted that the amount of the spring sheet 1313 and the protruding structure 1312 are not limited hereto, and it can be determined according to the design or requirement. The recess structure 1221 of the shaft 122 can be an annular groove, and the width of the recess structure 1221 matches the distance between the protruding structures 1312 of the two hubs 131.

When the wheel 13 is installed on the wheel holder 12, it is located in the accommodation space between the first clamping arm 124A and the second clamping arm 124B at first, wherein the through holes 1311 of the two hubs 131 correspond to the first elongated hole 125A and the second clamping hole 125B. Next, the shaft 122 passes through the first elongated hole 125A, the through hole 1311 of the two hubs 131 and the second clamping hole 125B in sequence from the outside of the first clamping arm 124A. When the shaft 122 passes through the through holes 1311 of the two hubs 131, it will press the protruding structure 1312 of the hub 131 to open up the spring sheet 1313 of the hub 131. Furthermore, when the shaft 122 continues to move toward the second clamping hole 125B to the position where the protruding structure 1312 of the hub 131 is corresponding to the recess structure 1221 of the shaft 122, the spring sheet 1313 of the hub 131 recovers and the protruding structure 1312 of the hub 131 would be stuck in the recess structure 1221 to restrict the wheel 13 from the axial movement.

In the present embodiment, the holder 12 further includes two cover plates 126 respectively configured on the outer surfaces of the first elongated hole 125A and the second clamping hole 125B. In practice, the outer surfaces of the first clamping arm 124A and the second clamping arm 124B respectively include a mounting groove 127, and the mounting grooves 127 are corresponding to the first elongated hole 125A and the second clamping hole 125B. The cover plates 126 can be configured in the mounting groove 127 and includes a mounting structure, such as a buckle, fixed on the first clamping arm 124A and the second clamping arm 124B. At this time, the cover plates 126 cover the first elongated hole 125A and the second clamping arm 124B to prevent other substances from entering into the first elongated hole 125A and the second clamping arm 124B to ensure the shaft 122 to move up and down. Thereby, the operation of the push-pull walking stick 1 can be ensured to increase the reliability.

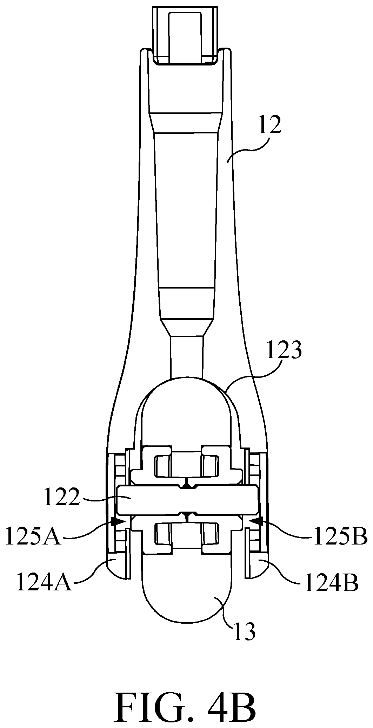

Please refer to FIG. 4A and FIG. 4B together. FIG. 4B is a sectional diagram illustrating the wheel holder 12 and the wheel 13 according to another embodiment of the present invention. FIG. 4A and FIG. 4B show two states of the push-pull walking stick of the present invention during operation. As shown in FIG. 4A, when the shaft 122 moves away from the stick body 11, the distance D are formed between the wheel 13 and the resist structure 123 of the wheel holder 12. At this time, the wheel 13 can rotates around shaft 122 without any external force. As shown in Figure 4B, when the shaft 122 moves toward the stick body 11, the resist structure 123 of the wheel holder 12 would contact and resist against the wheel 13, and the wheel 13 would be pressed by the resist structure 123 and unable to rotate.

In practice, the material of the wheel holder 12 can be polytetrafluoroethylene (PTFE), polyimide (PI), polyetheretherketone (PEEK), polyphenylene sulfide (PPS), nylon, Polyoxymethylene (POM) and other materials with high wear resistance and well friction characteristics. When the shaft 122 moves towards the stick body 11, the wheel 13 will resist against the resist structure 123 on the wheel holder 12.

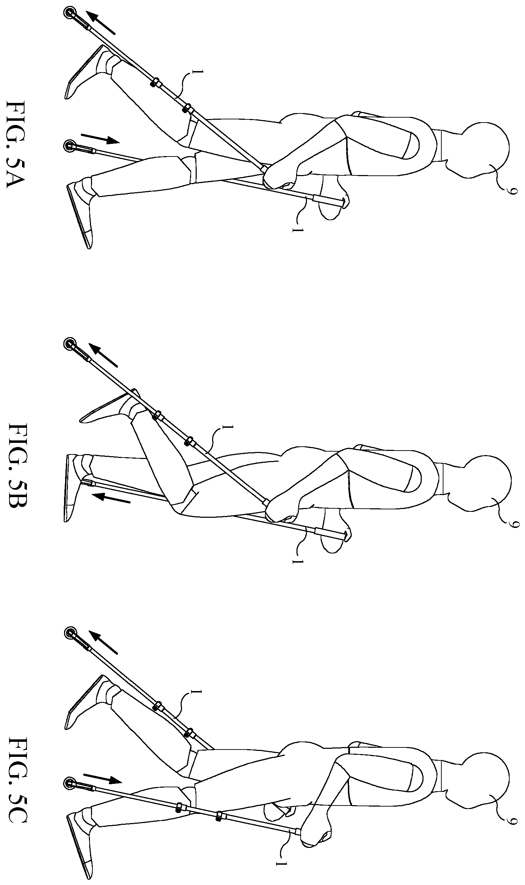

Please refer to FIG. 4A, FIG. and FIG. 5A to FIG. 5C. FIGs. 5A to 5C is schematic diagram illustrating people walking with the push-pull walking stick according to an embodiment of the present invention. As shown in FIGs. 5A to 5C, when of the user 9 takes a step forward with his right foot, the user 9 "pushes" the push-pull walking stick 1 with his right hand toward the ground at the same time. Then, when the user 9 prepares for taking another step forward with his left foot and the tip 111 is located behind user 9, the user 9 "pulls" the push-pull walking stick 1 with his right hand, so as to drive the push-pull walking stick 1 to move forward. In practice, the user 9 will use a pair of push-pull walking sticks 1, thus it will form a "push-pull" operation to the push-pull walking sticks 1 when the user 9 is walking (as shown by the arrows in FIG. 5A to FIG. 5C).

In practice, the state shown in FIG. 4B is the situation that the user 9 "pushes" the push-pull walking stick 1. When the user 9 pushes the push-pull walking stick 1, the tip 111 of the stick body 11 will apply force toward the ground, and the tip 111 will drive the wheel holder 12 to move toward the ground. At this time, the shaft 122 of the wheel holder 12 will move toward the towards the stick body 11 through the first elongated hole 125A and the second elongated hole 125B and the resist structure 123 will resist against the wheel 13 to stop the wheel 13 rotating. At this time, the wheel 13 can be regarded as a fixing support point, and the user 9 can walk forward by the support point and the pushing force. The state shown in FIG. 4A is the situation that the user 9 "pulls" the push-pull walking stick 1. When the user 9 pulls the push-pull walking stick 1, the tip 111 of the stick body 11 will be lifted from the ground and move forward, and the tip 111 will drive the wheel holder 12 to move away from the ground. At this time, the shaft 122 of the wheel holder 12 will move away from the stick body 11 through the first elongated hole 125A and the second elongated hole 125B and the wheel 13 can roll forward on the ground along with the stick body 11. Therefore, the push-pull walking stick of the present invention can generate a support point and friction force by pushing the wheel holder 12 and the wheel 13 to achieve the purpose of pushing forward. Moreover, there is a labor-saving effect when the user pulls the push-pull walking stick 1 moving forward by the wheel without lifting the stick from the ground.

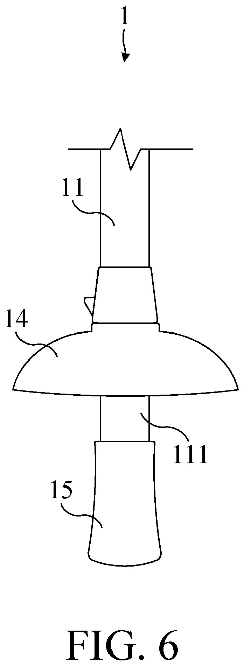

Please refer to Figure 6. FIG. 6 is a structural schematic diagram illustrating a push-pull walking stick according to another embodiment of the present invention. FIG. 6 shows another using state of the push-pull walking stick 1 according to the present invention. In the present embodiment, the stick body 11 further includes an external thread 113, and the push-pull walking stick 1 further includes a fender 14 and a bottom pad 15. The fender 14 has a hole with an internal thread matching the external thread 113 and the fender 14 is configured on the stick body 11 through the internal thread to prevent mud of the ground from splashing. The bottom pad 15 has a groove structure for accommodating the tip 111 of the stick body 11 and the shape of the groove structure matches the shape of the tip 111. In practice, the user can disassemble the wheel holder 12 and install the fender 14 and bottom pad 15 on the stick body 11 as a general hiking stick. It should be noted that the user can only install the fender 14 or install the fender 14 and the bottom pad 15 at the same time.

In summary, the push-pull walking stick of the present invention can generate a support point and friction force through the wheel holder and the wheel when the user pushes the push-pull walking stick, so as to achieve the purpose of pushing forward. Also, it is unnecessary to lift the stick body away from the ground when the user pulls the push-pull walking stick forward by the wheels, so as to achieve the effort-saving. Moreover, the the wheel holder of the push-pull walking stick of the present invention can be fixed on the stick body through the buckle ring and buckle structure to improve the stability. Furthermore, the push-pull walking stick of the present invention is provided with the protruding structure of the hubs and the recess structure of the shaft to install the shaft and the wheel on the wheel holder, and the wheel cannot move axially to reduce the costs and increase stability. Moreover, the push-pull walking stick of the present invention can prevent other substances from entering into the shaft through the cover plate to improve reliability.

With the examples and explanations mentioned above, the features and scope of the invention are hopefully well described. More importantly, the present invention is not limited to the embodiment described herein. Those skilled in the art will readily observe that numerous modifications and alterations of the device may be made within the scope of the invention as disclosed in the appended claims.

## Claims

1. A push-pull walking stick (1) for assisting a user in walking, comprising:
a stick body (11), comprising a tip (111) arranged at one end of the stick body (11);
a wheel holder (12), detachably connected to the tip (111) of the stick body (11), the wheel holder (12) comprising a connecting part (121), a shaft (122) and a resist structure (123), the connecting part (121) comprising a fixing hole (1211) to accommodate the tip (111), the shaft (122) being connected to the connecting part (121) and capable of moving along the direction of the stick body (11), the resist structure (123) being configured on the connecting part (121) and located between the connecting part (121) and the shaft (122); and
a wheel (13), comprising two hubs (131) arranged opposite to each other, the hubs (131) respectively having a through hole (1311), the wheel (13) being configured on the shaft (122) by the through holes (1311) of the hubs (131) to rotate around the shaft (122), the wheel (13) being configured to contact the ground;
wherein, when the stick body (11) applies force by the tip (111) to the ground, the shaft (122) moves toward the stick body (11) and the resist structure (123) resists against the wheel (13) to stop the wheel (13) from rotating; when the tip (111) is located behind the user and the stick body (11) moves forward with the user's pace, the shaft (122) moves away from the stick body (11) and the wheel (13) rolls along the ground,
**characterized in that**,
the hubs (131) respectively include a protruding structure (1312) protruding from the through hole (1311), and the shaft (122) includes a recess structure (1221), when the wheel (13) is configured on the shaft (122), the protruding structures (1312) of the hubs (131) are limited in the recess structure (1221).

2. The push-pull walking stick of claim 1, wherein the wheel holder (12) further includes a first clamping arm (124A) and a second clamping arm (124B), the first clamping arm (124A) and the second clamping arm (124B) are disposed opposite to the connecting part (121), the shaft (122) is arranged cross the first clamping arm (124A) and the second clamping arm (124B), the resist structure (123) and the wheel (13) are located between the first clamping arm (124A) and the second clamping arm (124B).

3. The push-pull walking stick of claim 2, wherein the first clamping arm (124A) has a first elongated hole (125A) and the second clamping arm (124B) has a second elongated hole (125B), the first elongated hole (125A) and the second elongated hole (125B) extend along the direction of the stick body (11) and are corresponding to each other, two ends of the shaft (122) are respectively arranged in the first elongated hole (125A) and the second elongated hole (125B) to move in the first elongated hole (125A) and the second elongated hole (125B).

4. The push-pull walking stick of claim 3, wherein the wheel holder (12) includes two cover plates (126) respectively configured on the outer surfaces of the first clamping arm (124A) and the second clamping arm (124B), the cover plates (126) are configured to cover the first elongated hole (125A) and the second elongated hole (125B).

5. The push-pull walking stick of claim 2, wherein the distance between the first clamping arm (124A) and the second clamping arm (124B) is corresponded to the width of the wheel (13).

6. The push-pull walking stick of claim 1, wherein the stick body (11) includes a buckle structure (112) and the connecting part (121) includes a buckle ring (1212) matching the buckle structure (112), and the buckle ring (1212) is configured to be attached on the buckle structure (112) to fix the wheel holder (12) on the stick body (11).

7. The push-pull walking stick of claim 1, wherein the push-pull walking stick (1) further includes a fender (14) and a bottom pad (15), and the stick body (11) has an external thread (113), the fender (14) has a hole with an internal thread matching the external thread (113), the fender (14) is configured on the stick body (11) through the internal thread, and the bottom pad (15) has a groove structure for accommodating the tip (111) of the stick body (11), when the wheel holder (12) is detached from the stick body (11), the fender (14) and the bottom pad (15) are selectively installed on the stick body (11).

8. The push-pull walking stick of claim 1, wherein the stick body (11) is a telescopic stick.

## Patentansprüche

1. Push-Pull-Gehstock (1) zur Unterstützung eines Benutzers beim Gehen, umfassend: einen Stockkörper (11), der eine Spitze (111) aufweist, die an einem Ende des Stockkörpers (11) angeordnet ist; einen Radhalter (12), lösbar mit der Spitze (111) verbunden, wobei der Radhalter (12) einen Verbindungsteil (121), einen Schaft (122) und eine Widerstandsstruktur (123) umfasst, wobei der Verbindungsteil (121) an der Spitze (111) befestigt ist, der Schaft (122) mit dem Verbindungsteil (121) verbunden ist und sich entlang der Längsrichtung des Stockkörpers (11) bewegen kann, und die Widerstandsstruktur (123) am Verbindungsteil (121) angeordnet ist; ein Rad (13), das zwei Naben (131) umfasst, die einander gegenüberliegen, wobei jede der Naben (131) eine Durchgangsöffnung (1311) aufweist, wobei der Schaft (122) durch die Durchgangsöffnungen (1311) der Naben (131) geführt ist, so dass sich das Rad (13) um den Schaft (122) drehen kann und den Boden berührt; wobei, wenn der Stockkörper (11) eine Kraft auf die Spitze (111) ausübt, der Schaft (122) sich in Richtung des Stockkörpers (11) bewegt und die Widerstandsstruktur (123) gegen das Rad (13) wirkt, um die Drehung des Rades (13) zu stoppen; und wobei, wenn sich die Spitze (111) in Richtung der Gehbewegung des Benutzers bewegt, der Schaft (122) sich vom Stockkörper (11) weg bewegt und das Rad (13) entlang des Bodens rollt.

2. Push-Pull-Gehstock nach Anspruch 1, wobei jede der Naben (131) eine Vorsprungsstruktur (1312) umfasst und der Schaft (122) eine Ausnehmungsstruktur (1221) aufweist, wobei die Vorsprungsstrukturen (1312) in der Ausnehmungsstruktur (1221) aufgenommen sind.

3. Push-Pull-Gehstock nach Anspruch 2, wobei der Radhalter (12) ferner einen ersten Klemmarm (124A) und einen zweiten Klemmarm (124B) umfasst, wobei die Vorsprungsstruktur (1312) zwischen dem ersten Klemmarm (124A) und dem zweiten Klemmarm (124B) angeordnet ist.

4. Push-Pull-Gehstock nach Anspruch 3, wobei der erste Klemmarm (124A) ein erstes Langloch (125A) und der zweite Klemmarm (124B) ein zweites Langloch (125B) aufweist, wobei die Langlöcher (125A, 125B) sich entlang der Längsrichtung des Stockkörpers (11) erstrecken.

5. Push-Pull-Gehstock nach Anspruch 4, wobei der Schaft (122) zwei Enden aufweist, die jeweils in dem ersten Langloch (125A) und dem zweiten Langloch (125B) geführt sind.

6. Push-Pull-Gehstock nach Anspruch 1, wobei der Stockkörper (11) ferner eine Schnallenstruktur (112) umfasst und der Verbindungsteil (121) eine Schnalle (1212) aufweist, die mit der Schnallenstruktur (112) zusammenwirkt, um den Radhalter (12) am Stockkörper (11) zu befestigen.

7. Push-Pull-Gehstock nach Anspruch 1, wobei der Push-Pull-Gehstock (1) ferner einen Schutzflügel (14) und ein Bodenkissen (15) umfasst, wobei der Schutzflügel (14) ein Innengewinde aufweist, das mit einem Außengewinde an der Spitze (111) zusammenwirkt, und das Bodenkissen (15) eine Nutstruktur zur Aufnahme der Spitze (111) aufweist.

8. Push-Pull-Gehstock nach Anspruch 1, wobei der Stockkörper (11) ein Teleskopstock ist.

## Revendications

1. Canne de marche push-pull (1) destinée à aider un utilisateur à marcher, comprenant :
un corps de canne (11) comprenant une pointe (111) disposée à une extrémité du corps de canne (11) ;
un support de roue (12) relié de manière détachable à la pointe (111), le support de roue (12) comprenant une partie de connexion (121), un arbre (122) et une structure de résistance (123), la partie de connexion (121) étant fixée à la pointe (111), l'arbre (122) étant connecté à la partie de connexion (121) et mobile le long de la direction longitudinale du corps de canne (11), et la structure de résistance (123) étant disposée sur la partie de connexion (121) ;
une roue (13) comprenant deux moyeux (131) disposés l'un en face de l'autre, chacun des moyeux (131) comprenant un trou traversant (1311), l'arbre (122) traversant les trous traversants (1311) des moyeux (131) de sorte que la roue (13) puisse tourner autour de l'arbre (122) et entrer en contact avec le sol ;
dans lequel, lorsque le corps de canne (11) applique une force sur la pointe (111), l'arbre (122) se déplace vers le corps de canne (11) et la structure de résistance (123) résiste à la roue (13) afin d'arrêter la rotation de la roue (13) ; et
dans lequel, lorsque la pointe (111) se déplace vers l'avant dans le sens de marche de l'utilisateur, l'arbre (122) se déplace à l'écart du corps de canne (11) et la roue (13) roule sur le sol.

2. Canne de marche push-pull selon la revendication 1, dans laquelle chacun des moyeux (131) comprend une structure saillante (1312) et l'arbre (122) comprend une structure de logement (1221), les structures saillantes (1312) étant logées dans la structure de logement (1221).

3. Canne de marche push-pull selon la revendication 2, dans laquelle le support de roue (12) comprend en outre un premier bras de serrage (124A) et un second bras de serrage (124B), la structure saillante (1312) étant disposée entre le premier bras de serrage (124A) et le second bras de serrage (124B).

4. Canne de marche push-pull selon la revendication 3, dans laquelle le premier bras de serrage (124A) comprend un premier trou allongé (125A) et le second bras de serrage (124B) comprend un second trou allongé (125B), les trous allongés (125A, 125B) s'étendant le long de la direction longitudinale du corps de canne (11).

5. Canne de marche push-pull selon la revendication 4, dans laquelle l'arbre (122) comprend deux extrémités disposées respectivement dans le premier trou allongé (125A) et le second trou allongé (125B).

6. Canne de marche push-pull selon la revendication 1, dans laquelle le corps de canne (11) comprend en outre une structure de boucle (112), et la partie de connexion (121) comprend une boucle (1212) configurée pour coopérer avec la structure de boucle (112) afin de fixer le support de roue (12) au corps de canne (11).

7. Canne de marche push-pull selon la revendication 1, comprenant en outre un garde-boue (14) et un patin inférieur (15), le garde-boue (14) comprenant un filetage interne correspondant à un filetage externe de la pointe (111), et le patin inférieur (15) comprenant une structure de rainure destinée à recevoir la pointe (111).

8. Canne de marche push-pull selon la revendication 1, dans laquelle le corps de canne (11) est une canne télescopique.
